# EUROPÄISCHE PATENTANMELDUNG

(11) **EP 3 578 346 A1**
(43) Veröffentlichungstag der Anmeldung: **11.12.2019**
(21) Anmeldenummer: 19186729.0
(22) Anmeldetag: 07.05.2015
(51) Int. Cl.: B29C 67/00, B33Y 50/00, B33Y 80/00

(54) **VERFAHREN ZUR BEREITSTELLUNG VON DATEN**

(30) Priorität: 18.07.2014 DE 102014110156
(62) Teilanmeldung aus: 15728388.8
(71) Anmelder: HARTING Electric GmbH & Co. KG, 32339 Espelkamp (DE)
(72) Erfinder: Meyer, Dr. Thorsten, 49448 Brockum (DE); Naß, Andreas, 31606 Warmsen (DE); Hilger, Claus, 35606 Solms (DE)

(57) **Zusammenfassung**

Beim Maschinenbau herrscht ein Trend die eigenen Maschinen mit einem firmenspezifischen Design auszustatten, um beim Kunden eine Herstellerzugehörigkeit zu erzeugen. Das individuelle Design sollte sich idealerweise in jeder einzelnen Komponente der Maschine wiederspiegeln. Bei Zuliefererteilen ist dies bislang schwierig.

Die Erfindung bezieht sich daher auf ein Verfahren zur Bereitstellung von Daten, wobei die Daten über ein Netzwerk und/oder über eine geeignete Plattform über das Internet heruntergeladen werden, wobei die Daten in einen 3D-Drucker eingespeist werden, wobei der 3D-Drucker anschließend ein Bauteil ausdruckt und/oder einen Rohling bedruckt und wobei es sich beim Bauteil und/oder beim bedruckten Rohling um eine Komponente eines Steckverbinders handelt. Über ein derartiges Verfahren kann der Kunde auch Steckverbinder an das Maschinendesign anpassen und ggf. auch weitere technische Komponenten, beispielsweise Sensoren und Display, hinzufügen. Das Know-how und die sicherheitsrelevanten Aspekte werden weiterhin vom Steckverbinderhersteller abgedeckt.

## Beschreibung

Die Erfindung geht aus von einem Verfahren zur Bereitstellung von Daten nach dem Oberbegriff des unabhängigen Anspruchs 1.

Derartige Verfahren liefern Daten über Bauteile und/oder fertige Komponenten, die insbesondere im Maschinenbau eingesetzt werden.

### Stand der Technik

Die EP 1 429 911 B1 zeigt einen 3D-Drucker, der zum Drucken dreidimensionaler Bauteile geeignet ist. Mit einem solchen Drucker lassen sich beispielsweise Komponenten bzw. Bauteile für Maschinen provisorisch herstellen.

Die Funktionalität derartig ausgedruckter Komponenten entspricht jedoch nicht dem Originalbauteil.

### Aufgabenstellung

Die Aufgabe der Erfindung besteht darin, ein Verfahren zur Bereitstellung von Daten zur Verwendung bei einem 3D-Drucker vorzuschlagen, dessen Bauteile langfristig einsetzbar sind.

Die Aufgabe wird durch die kennzeichnenden Merkmale des unabhängigen Anspruchs 1 gelöst.

Vorteilhafte Ausgestaltungen der Erfindung sind in den Unteransprüchen angegeben.

Beim hier vorgeschlagenen Verfahren zur Bereitstellung von Daten, werden die Daten von einem Hersteller, über ein Netzwerk und/oder über eine geeignete Plattform, über das Internet bereitgestellt und können von einem Kunden heruntergeladen werden.

Die heruntergeladenen Daten werden in einen 3D-Drucker eingespeist. Der 3D-Drucker druckt anschließend ein Bauteil aus. Alternativ kann mithilfe der Daten ein Rohling bedruckt werden. Der Rohling wird vorteilhafterweise vom Anbieter der Daten geliefert bzw. bereitgestellt. Die Geometrie des Rohlings ist in dann in den heruntergeladenen Daten enthalten.

Um einen Rohling besser bedrucken zu können, ist ein 3D-Drucker vorteilhafterweise mit einem dreidimensional beweglichen Haltearm ausgestattet, der den Rohling trägt. Der Haltearm kann den Rohling dann immer so zu den Düsen des 3D-Druckers positionieren, dass eine Bedruckung möglich ist. Dadurch kann der dreidimensionale Rohling auch dreidimensional - also von allen Seiten und im Falle von Steckverbindergehäusen auch von innen - bedruckt werden.

Durch die schnelle Bereitstellung von geeigneten Daten können beispielsweise Konstruktionszeiten reduziert werden.

Das ausgedruckte Bauteil und/oder der bedruckte Rohling bildet eine Komponente eines Steckverbinders. Mehrere Komponenten können dann in Summe einen kompletten Steckverbinder bilden. Hierzu müssten verschiedene Materialien, leitende und nichtleidende Materialien, verdruckt werden. Dies kann über einen einzelnen 3D-Drucker oder über mehrere verschiedene 3D-Drucker geschehen.

Für das erfindungsgemäße Verfahren wird ein Kunststoff-3D- und ein Metall-3D-Drucker in Reihe geschaltet. Die Kunststoff- und Metallkomponenten des Bauteils können dann jeweils von den spezialisierten Druckern erzeugt werden. Die jeweils halbfertigen Komponenten werden dann von einem Drucker an den anderen Drucker übergeben.

Vorteilhafterweise handelt es sich bei den Daten um einen Originaldatensatz, der um einen Kundendatensatz erweitert werden kann. Der Originaldatensatz beinhaltet die unbedingt erforderlichen Daten des Bauteils. Diese Daten sind beispielsweise Sicherheitsrelevant. Ohne Einhaltung dieser Daten dürfte ein dieses Bauteil enthaltendes Produkt nicht vertrieben und betrieben werden. Diese erforderlichen Daten sind unmodifizierbar.

Der Originaldatensatz kann um den Kundendatensatz erweitert werden. Der Kundendatensatz erlaubt die individuelle Gestaltung des Bauteils. Die individuelle Gestaltung kann beispielsweise die Platzierung eines Kundenfirmenlogos auf dem Steckverbindergehäuse sein. Es können aber auch firmen- oder produktspezifische Designelemente ausgeführt werden. Dadurch kann der Kunde den Steckverbinder individuell an sein Produkt, beispielsweise an eine Maschine, anpassen.

Vorteilhafterweise wird das Bauteil zum Austausch einer defekten Steckverbinderkomponente, als ein so genanntes Ersatzteil, eingesetzt. Dadurch können Stillstände von Maschinen schnell beseitigt und idealerweise präventiv vermieden werden.

Beim Bauteil kann es sich aber auch um ein Steckverbindergehäuse handeln. Die Innereien des Steckverbinders, insbesondere der Isolierkörper und die Kontaktelemente, werden vom Steckverbinderhersteller geliefert. Der Kunde kann sich anhand der übermittelten Daten ein Gehäuse ausdrucken und dies gegebenenfalls mit einem eigenen Design, inklusive eigenem Logo versehen.

Der Kunden könnte aber auch Daten des Isolierkörpers erhalten, diesen selber drucken und den Isolierkörper mit Kontaktelementen des Herstellers bzw. Datenlieferanten bestücken.

Der Kunde kann die erworbenen Daten frühzeitig in seine Entwicklung einbeziehen und beispielsweise in CAD-Modelle einbauen. Dadurch wird die Entwicklungszeit des Kunden reduziert.

Die Erfindung bezieht sich ebenfalls auf einen Rohling, der im oben beschriebenen Verfahren eingesetzt werden kann. Das bedeutet, dass der Datensatz die Geometrie des Rohlings zumindest implizit enthalten muss. Vorteilhafterweise weist der Rohling Schnittstellen auf, die über den Kundendatensatz angesprochen werden. Bei diesen Schnittstellen handelt es sich um Bereiche, die durch den Kundendatensatz individualisiert werden können.

Der Rohling weist vorteilhafterweise technische Schnittstellen und Designschnittstellen auf. Die Designschnittstellen können zur Anbringung von Designelementen, wie oben am Beispiel eines Gehäuses beschrieben, genutzt werden.

Die technischen Schnittstellen sind zur Anbringung von technischen Komponenten am Bauteil geeignet. Beispielsweise kann ein Steckverbindergehäuse mit einem Display oder einem Touchscreen versehen werden. Dabei wird beispielsweise das technische Element auf den Rohling gelegt und vom 3D-Drucker umdruckt und so mit dem Rohling verbunden.

Die Schnittstellen des Rohlings können auch ohne 3D-Bedruckung vom Kunden benutzt werden. Alle technischen und sicherheitsrelevanten Eigenschaften werden vom Rohling erfüllt. Bei den Schnittstellen handelt es sich vorteilhafterweise um Bereiche auf der Oberfläche des Rohlings, die von einem 3D-Drucker bedruckt werden können und das aufgebrachte Material auf der Oberfläche gut und langlebig anhaftet. Die Oberflächenbeschaffenheit dieser Bereiche ist auf einen 3D-Druck abgestimmt.

Vorteilhafterweise weist die Oberfläche der Schnittstellen eine mittlere Rauigkeit zwischen 1 und 10 µm auf. Auf einer derart rauen Oberfläche haften besonders gut 3D-Ausdrucke aus Kunststoffmaterial.

Die Oberfläche der Schnittstellen ist auch in der Materialbeschaffenheit auf den 3D-Druck abgezielt.

Es ist vorteilhaft die zur Verfügung gestellten Daten zeitlich limitiert verfügbar zu gestalten. Der Kunde soll die Daten nicht unendlich lange nutzen können. Es könnte beispielsweise vor der Benutzung der Daten eine Lizenzdatei abgefragt werden, die die Nutzungsdauer der Daten bestimmt. Alternativ oder zusätzlich könnte die Lizenzdatei die maximale Anzahl der druckbaren Komponenten enthalten. Durch die Maßnahme könnte der Datenbereitsteller sicherstellen, dass seine Daten Zeit- und/oder Stückzahlabhängig nutzbar sind. Die Daten sind zeitlich begrenzt, also nur temporär, nutzbar.

In einer vorteilhaften Ausführungsform der Erfindung handelt es sich um einen 3D-Drucker, der sowohl Kunststoffmaterialien wie auch metallische (leitende) Materialien verarbeiten kann. Dadurch kann der 3D-Drucker beispielsweise einen Kunststoff-Rohling mit metallischen Komponenten erweitern und/oder einen Metallrohling mit Kunststoffelementen ergänzen. Beispielsweise könnte so ein metallisches Steckverbindergehäuse mit einem Isolierkörper und darin befindlichen Kontaktelementen ausgestattet werden.

Im Folgenden wird der Kern der Erfindung noch einmal zusammengefasst. Beim Maschinenbau herrscht ein Trend die eigenen Maschinen mit einem firmenspezifischen Design auszustatten, um beim Kunden eine Herstellerzugehörigkeit zu erzeugen. Das individuelle Design sollte sich idealerweise in jeder einzelnen Komponente der Maschine wiederspiegeln. Bei Zuliefererteilen ist dies bislang schwierig. Die Erfindung bezieht sich daher auf ein Verfahren zur Bereitstellung von Daten, wobei die Daten über ein Netzwerk und/oder über eine geeignete Plattform über das Internet heruntergeladen werden, wobei die Daten in einen 3D-Drucker eingespeist werden, wobei der 3D-Drucker anschließend ein Bauteil ausdruckt und/oder einen Rohling bedruckt und wobei es sich beim Bauteil und/oder beim bedruckten Rohling um eine Komponente eines Steckverbinders handelt. Über ein derartiges Verfahren kann der Kunde auch Steckverbinder an das Maschinendesign anpassen und ggf. auch weitere technische Komponenten, beispielsweise Sensoren und Display, hinzufügen. Das Know-how und die sicherheitsrelevanten Aspekte werden weiterhin vom Steckverbinderhersteller abgedeckt.

## Patentansprüche

1. Verfahren zur Bereitstellung von Daten für ein 3D-Druckverfahren, wobei die Daten über ein Netzwerk und/oder über eine geeignete Plattform über das Internet heruntergeladen werden,
**wobei** die Daten in miteinander in Reihe geschaltete Kunststoff-3D-Drucker und Metall-3D-Drucker eingespeist werden,
**wobei** die 3D-Drucker gemeinsam ein Bauteil ausdrucken, indem der Kunststoff-3D-Drucker oder Metall-3D-Drucker zunächst eine halbfertige Komponente ausdruckt und die halbfertige Komponente anschließend dem jeweils anderen 3D-Drucker übergeben wird, **und wobei** es sich beim Bauteil um eine Komponente eines Steckverbinders handelt.

2. Verfahren zur Bereitstellung von Daten für ein 3D-Druckverfahren nach Anspruch 1
**dadurch gekennzeichnet, dass**
es sich bei den Daten um einen Originaldatensatz handelt, der um einen Kundendatensatz erweitert werden kann.

3. Verfahren zur Bereitstellung von Daten für ein 3D-Druckverfahren nach vorstehendem Anspruch
**dadurch gekennzeichnet,**
• **dass** der Originaldatensatz die unbedingt erforderlichen Daten des Bauteils enthält und nicht modifiziert werden kann
• **und dass** der Kundendatensatz zur individuellen Gestaltung des Bauteils benutzt wird.

4. Verfahren zur Bereitstellung von Daten für ein 3D-Druckverfahren nach einem der vorstehenden Ansprüche
**dadurch gekennzeichnet, dass**
das Bauteil zum Austausch einer defekten Steckverbinderkomponente, als ein so genanntes Ersatzteil, eingesetzt wird.

5. Verfahren zur Bereitstellung von Daten für ein 3D-Druckverfahren nach einem der vorstehenden Ansprüche
**dadurch gekennzeichnet, dass**
es sich beim Bauteil um ein Gehäuse eines Steckverbinders handelt.

6. Verfahren zur Bereitstellung von Daten für ein 3D-Druckverfahren nach einem der vorstehenden Ansprüche
**dadurch gekennzeichnet, dass**
die Daten zeitlich begrenzt, also nur temporär, nutzbar sind und/oder mit den Daten eine maximale Anzahl von Bauteilen ausgedruckt werden kann.

7. Verfahren zur Bereitstellung von Daten für ein 3D-Druckverfahren nach einem der vorstehenden Ansprüche
**dadurch gekennzeichnet, dass**
mit dem 3D-Drucker sowohl Kunststoffmaterialien wie auch metallische Materialien verarbeitet werden.

8. Rohling zur Verwendung in einem Verfahren gemäß Anspruch 1.
